# EUROPEAN PATENT APPLICATION

(11) **EP 4 635 670 A1**
(43) Date of publication of application: **22.10.2025**
(21) Application number: 24170889.0
(22) Date of filing: 17.04.2024
(51) Int. Cl.: B23K 26/00, B23K 26/03, B23K 26/361, B23K 26/40, B23K 101/00, B23K 103/16, B23K 103/00

(54) **METHOD FOR PRODUCING A VEHICLE COMPONENT**

(71) Applicant: SMP Deutschland GmbH, 79268 Bötzingen (DE); AUDI AG, 85057 Ingolstadt (DE)
(72) Inventor: Rinderlin, Jürgen, 79211 Denzlingen (DE); Sepp, Benjamin, 77723 Gengenbach (DE); Kugele, Daniel, 85051 Ingolstadt (DE); Deppner, Werner, 85055 Ingolstadt (DE); Schmatz, Jörg, 85419 Mauern (DE); Seckler, Jörg, 86551 Aichach (DE); Pickl, Richard, 85095 Denkendorf (DE)
(74) Representative: Westphal, Mussgnug & Partner Patentanwälte mbB

(57) **Abstract**

Provided is a method for producing a vehicle component comprising the steps of providing a raw vehicle component (1) made from a synthetic material, covering at least one side of the raw vehicle component (1) with at least one layer of material (2,12) to create an intermediate vehicle component, wherein the topmost of the at least one layers of material (2) provides the intermediate vehicle component with a homogenous surface with a first surface property, and subsequently removing the topmost of the at least one layers of material (2) completely from at least one area (A) of the at least one side of the intermediate vehicle component (1), wherein the step of subsequently removing the topmost of the at least one layers of material (2) completely from at least one area (A) of the at least one side of the intermediate vehicle component (1) is supervised by a sensor (5,15,25).

## Description

In order to save weight, an increasing number of vehicle components are made from synthetic materials, especially plastics. Many of these components comprise polycarbonates (PC), as these are strong materials that can be moulded, thermoformed and worked. One or more sides of the thus obtained raw vehicle components can subsequently be covered with one or more surface layers, e.g. paint or lacquer, to provide the final vehicle component with a desired surface property, e.g. colour.

Whereas this approach provides an easy way to produce vehicle components with homogenous, e.g. monochrome, surfaces, as soon as surfaces with varying surface properties, e.g. multicoloured surfaces, are desired things become more complicated. In order to obtain good results, it is preferable to avoid a configuration with several layers of surface material such as paint or lacquer. One way to achieve this, especially in cases where one of the desired surface properties (e.g. colours) is dominant, is covering an entire surface of the vehicle surface with a first surface layer and removing the first surface layer at those locations where a second surface property (e.g. another colour) is desired, which can be done e.g. by ablating it with a laser-process, before applying the second surface layer or in order to uncover an underlying layer with the desired second surface property.

Unfortunately, however, this laser-process brings about high requirements for the thickness of the first surface layer, especially if it is to be performed automatically. This is a result of the fact that a direct interaction of the laser beam with a non-surface layer and especially with the synthetic material of the raw vehicle part, especially with regions of the raw vehicle part that are comprised of polycarbonate, is most undesirable, as this may damage this region and/or bring about an undesired change of the desired surface property, e.g. in the case of colour a colour change.

Therefore, the most straightforward approach, which resides in applying the laser beam for a predetermined time or for a predetermined number of passes in order to remove a layer of surface material (e.g. paint or lacquer to obtain a given colour) of a given thickness, leads to problems if the thickness of the layer of the first surface material varies.

These problems increase as soon as the geometry of the surface deviates from a flat geometry, e.g. because the raw vehicle part is curved and thus the surface material, e.g. paint or lacquer, applied to the raw vehicle part may move as long as it has not dried yet, leading to local variations of thickness.

Accordingly, the problem to be solved by the present disclosure is providing an improved method for producing a vehicle component with reduced requirements with respect to the homogeneity of the thickness of the layer of the first surface layer.

This problem is solved by a method with the features of claim 1. The dependent claims recite examples for additional features that may lead to advantageous embodiments.

A method for producing a vehicle component according to an embodiment of this disclosure comprises the steps of
- providing a raw vehicle component made from a synthetic material,
- covering at least one side of the raw vehicle component with at least one layer of material to create an intermediate vehicle component, wherein the topmost of the at least one layers of material provides the intermediate vehicle component with a homogenous surface with a first surface property (e.g. with a layer of paint or lacquer of a first colour), and
- subsequently removing parts of the topmost of the at least one layers of material (e.g. of the layer of paint or lacquer of the first colour) completely from at least one area of the at least one side of the vehicle component.

In this context, the term "raw vehicle component" relates to the vehicle component as created from the synthetic material, before any additional surface layer such as paint or lacquer is applied. At least one side, e.g. the front side or the back side, of this raw vehicle component is covered with at least one layer of material, the topmost layer of the at least one layer of material forming a first surface layer, e.g. a layer of paint of a first colour. This covering can be performed e.g. by spraying the respective layer material onto it, by dipping it into the respective layer material. Other variants of the covering may involve application a film, especially a painted or lacquered transparent film onto it, which may be preformed or over moulded or IMD'd (in mould decoration) or glued.

In order to prepare the part for adding areas with a second surface property (e.g. of at least one second colour or, if the raw vehicle component is transparent, transparent areas), subsequently parts of the first surface layer, e.g. the layer of paint of the first colour, are removed completely from at least one area of the at least one side of the vehicle component, i.e. in those areas where another surface property is desired, e.g. where another colour is to be applied or where transparency is desired. The word "subsequently" is used in this context in order to clarify that this removal is not obtained by a simultaneous interaction with the entire surface of the area from which the topmost layer of material, e.g., a layer of paint of the first colour, is to be removed.

It is a key feature of the disclosure that the step of subsequently removing parts of the topmost layer of material, e.g. of paint of the first colour, completely from at least one area of the at least one side of the vehicle component is supervised by a sensor. Preferably, but not necessarily, this occurs locally, i.e. the sensor does not evaluate data from the entire side of the raw vehicle component from which the topmost layer of material, e.g. paint of the first colour, is removed at the same time, but from a smaller region, especially the region in which the removal takes place at a given point of time.

The advantage of this local approach is that it allows for quicker reaction time and higher sensitivity of the sensor, as less data have to be processed and/or local changes within the supervised area lead to more significant signal changes more quickly if the supervised area is smaller.

As mentioned above, according to a preferred embodiment of the disclosure after removal of parts of the topmost layer of material such as paint of the first colour, a layer of material with a different surface property, such as a second colour, is applied to regions where the topmost layer of material has been removed. However, this is not a necessity; e.g. if the raw vehicle component is transparent the removal of parts of a layer of paint of the first colour can also serve to create lighting effects.

Preferably, the step of subsequently removing parts of the layer of paint of the first colour is performed by moving a laser along the at least one area of the at least one side of the vehicle component from which the topmost layer of material, e.g. a first colour, is to be removed, so that an ablation process occurs locally at the place where the laser beam interacts with the topmost layer of material. This moving can be performed e.g. line-wise or column-wise to cover the area.

If the sensor controls the movement of the laser, it is possible to let the laser stay at one place until the material of the topmost layer of material has been removed completely, even if due to varying thickness of the topmost layer of material this takes different amounts of time. Alternatively, e.g. if a negative effect may result from the thermal impact of leaving the laser in place until the topmost layer of material has been removed completely, this control allows to move the laser along the desired path of movement, e.g. along a given line, repeatedly and move on directly, preferably with higher speed, if at a given new position no material belonging to the topmost layer of material is detected by the sensor any more.

Alternatively or additionally, the sensor may control the intensity of the laser. In this case, as soon as the sensor detects that no material belonging to the topmost layer of material, e.g. no paint of the first colour, is left, the laser intensity can be tuned down or the laser can be switched off completely and tuned up or switched on again as soon as the sensor detects material belonging to the topmost layer of material, e.g. paint of the first colour, again after the sensor has been moved.

If the sensor is mounted on the laser and thus moves along with the laser, it is especially easy to monitor the situation at the interaction point between the laser beam and the vehicle part.

Alternatively, the sensor is moved parallel to the laser, but on the opposite side of the vehicle component, i.e. the measurement is made in a transmission mode. This approach works especially well if the sensor is an infrared spectrometer, preferably with a working range that is adapted to the infrared spectrum of the synthetic material, especially polycarbonate, in such a way that transmission is high. As one possible criterion, a transmission shift can be used if detection occurs via deflection mirror and detector aperture /sensor image.

Whenever a laser is used for partial removal of the topmost layer, it is preferable if the sequence of layers is chosen in such a way that the layer with the higher absorption value for the laser forms the topmost layer, as this makes it easier to remove this layer.

In this case, but also in a reflection geometry, the sensor can be an infrared spectrometer and the local supervision of the removal of material belonging to the topmost layer of material, e.g. paint of the first colour, comprises the evaluation of an IR spectrum measured by the infrared spectrometer.

Alternatively, the sensor can be a camera and the local supervision of the removal of material belonging to the topmost layer of material, e.g. paint of the first colour, comprises the comparison of the colour of pixels of the camera picture with reference pixel values.

In another advantageous embodiment of the method, the local supervision of the local removal of the topmost of the at least one layers of material comprises measuring local thickness variations in the area in which the topmost of the at least one layers of material with the sensor and programming movement and/or intensity of the laser based on the results of this measuring.

According to yet another embodiment of the method, the at least one side of the raw vehicle component is covered completely with two layers of material to create an intermediate vehicle component, so that by partial removal of the topmost of the layers of material the intermediate vehicle component is provided with two different surface properties.

Next, the invention is explained in more detail using figures that illustrate embodiments thereof. The figures show:
- Fig.1a:: A schematic setup for a first variant of a first implementation of the method,
- Fig.1b:: a schematic setup for a second variant of the first implementation of the method,
- Fig.2:: a schematic setup for a second implementation of the method,
- Fig.3a:: a schematic setup for a first variant of a third implementation of the method,
- Fig.3b:: a schematic setup for a second variant of the third implementation of the method,
- Fig.4a:: a schematic setup for a fourth implementation of the method, and
- Fig.4b:: a schematic setup for a fifth implementation of the method.

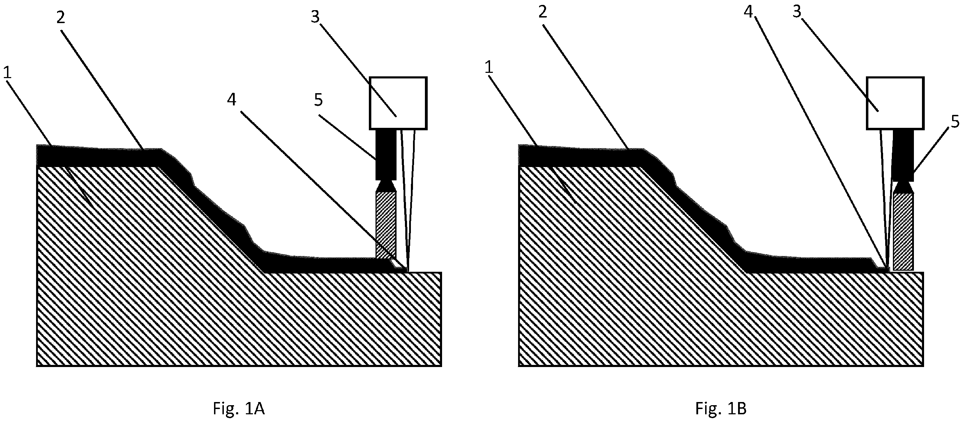

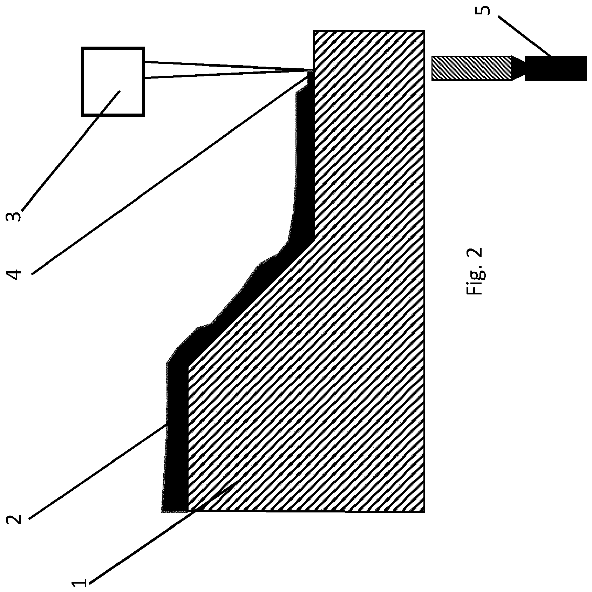

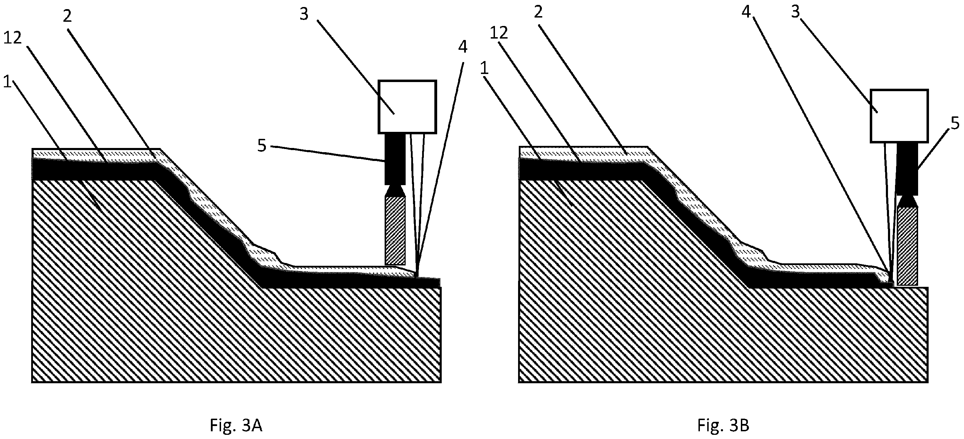

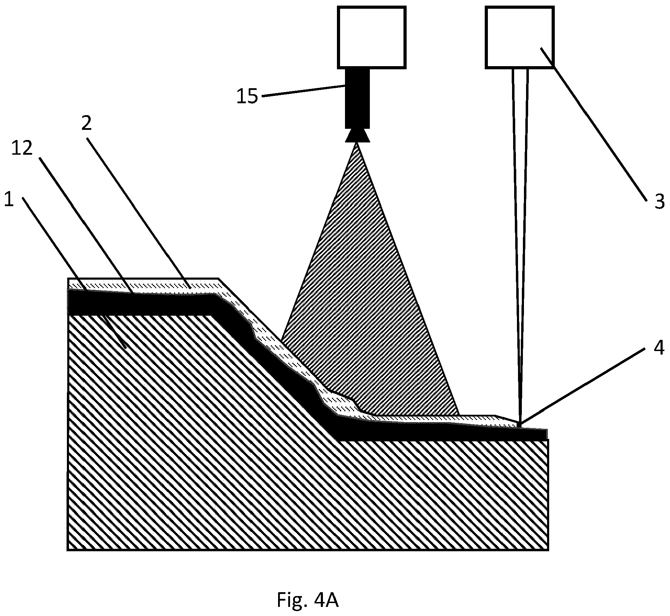

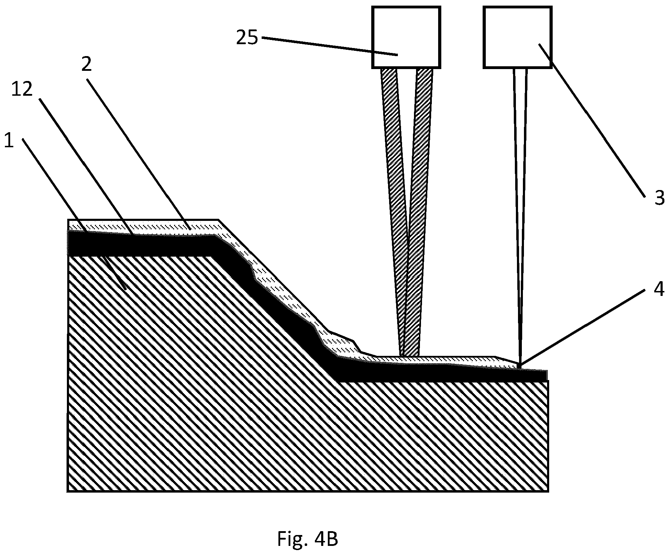

All figures show a raw vehicle component 1 made from a synthetic material, which has already been provided (i.e. manufactured from the synthetic material, e.g. by moulding) and which has already been covered on at least one side -the top side in the figures- of the raw vehicle component 1 with at least one layer of material 2,12. More precisely, in the embodiments of figures 1a, 1b and 2, the raw vehicle component 1 has been covered on its front side with exactly one layer of material 2, in this example with paint of a first colour. In contrast to that, in the embodiments of figures 3a,3b,4a and 4b, the raw vehicle component 1 has been covered with two layers of material 2,12, namely with paint of a first colour, which forms the topmost layer of material 2 on top of paint of a second colour, which is therefore an intermediate layer of material 12 in areas in which the topmost layer of material 2 is not removed, but determines the surface properties in areas where/when the topmost layer of material 2 has been removed.

Furthermore, in all figures the raw vehicle component 1 is shown during the process of subsequently removing the topmost layer of material 2, e.g. paint of the first colour, completely from at least one area A of the at least one side of the raw vehicle component 1.

As can be seen in all figures, in the examples presented therein this removal is obtained by use of a laser 3. At the interaction point 4 between the beam of the laser 3 and the topmost layer of material 2, the material of his layer paint is locally removed before the laser 3 moves on - in all figures towards the left- to remove material of the topmost layer from another section of the area A. In the figures, in the right part of area A the topmost layer of material 2 has already been removed, and the laser 3 is currently removing the paint in a section of area A that is adjacent to the right part of area A and will be moved further to the left as soon as removal of the layer of paint of the first colour 2 has been completed in said section of area A. It should, however, be noted, that it is also possible that the laser 3 is moved along the area A in several passes, removing only a part of the topmost layer of material at a given position in each pass.

An important feature of the disclosure is that the step of subsequently removing the layer of paint of the first colour 2 completely from the at least one area A of the at least one side of the raw vehicle component 1 is supervised locally by a sensor 5,15,25.

In the embodiment of figures 1A,1B,3A, and 3B, this sensor 5, which can e.g. be realized as a camera in Figures 1A,1B,3A and 3B, is mounted directly on the laser 3, so that it is moved along with the laser 3 and always supervises a sensor area comprising the interaction point 4 between the beam of the laser 3 and the topmost layer of material 2, e.g. a layer of paint of the first colour. In figures 1A and 3A, respectively, the sensor 5 supervises/analyses the next part of the area A that is to be treated by the laser 3, so that properties of the laser 3, e.g. the intensity of the beam that is applied, can be modified based on the information obtained from the sensor. In figures 1B and 3B, respectively, the sensor 5 supervises/analyses the part of the area A after treatment by the laser 3. This setup is especially useful when several passes of the laser 3 are used to remove the topmost layer of material 2 sequentially, as it provides information whether or not the laser 3 has to be activated (again) at a given location in the next pass or should move quickly past that location. If in this setup information on the topmost layer of material before any interaction with the laser is needed (which is available anyway in the embodiments of Figures 1A and 3A, respectively), a first scan can be performed with a deactivated laser 3.

Conversely, in the embodiment of figure 2, the sensor 5 is located on the side of the raw vehicle component 1 that is opposite to the side on which the laser 3 is located, but moves along in parallel with the movement of the laser 3. This arrangement is especially suitable if the sensor 5 is an infrared spectrometer and the laser 3 is an infrared laser operating in a spectral range in which the synthetic material of the raw vehicle part 1 does not absorb strongly.

In the embodiments of figures 4A and 4B, the sensor 15,25 is mounted separated from the laser 3, but on the same side of the raw vehicle component 1. This can be useful especially when the sensor 15,25 is capable of analysing larger regions, like the sensor 15, which is realized as a flash camera in figure 4A, or when it measures the response of a signal that is received from the supervised region of the material as a reaction to a signal that is emitted by the sensor 25, as illustrated in figure 4B.

### Reference numerals

- 1: raw vehicle component
- 2,12: layer of material
- 3: laser
- 4: interaction point
- 5,15,25: sensor
- A: area

## Claims

1. A method for producing a vehicle component comprising the steps of
- providing a raw vehicle component (1) made from a synthetic material,
- covering at least one side of the raw vehicle component (1) with at least one layer of material (2,12) to create an intermediate vehicle component, wherein the topmost of the at least one layers of material (2) provides the intermediate vehicle component with a homogenous surface with a first surface property, and
- subsequently removing the topmost of the at least one layers of material (2) completely from at least one area (A) of the at least one side of the intermediate vehicle component (1),
wherein the step of subsequently removing the topmost of the at least one layers of material (2) completely from at least one area (A) of the at least one side of the intermediate vehicle component (1) is supervised by a sensor (5,15,25) .

2. The method of claim 1, wherein after removing the topmost of the at least one layers of material (2) completely from at least one area (A) of the at least one side of the intermediate vehicle component (1) a layer of material with a second surface property is applied to at least one area (A) where the topmost of the at least one layers of material (2) has been removed.

3. The method of claim 1 or 2, wherein the step of subsequently removing the topmost of the at least one layers of material (2) completely from at least one area (A) of the at least one side of the intermediate vehicle component (1) is performed by moving a laser (3) along the at least one area (A) of the at least one side of the intermediate vehicle component (1) from which the topmost of the at least one layers of material is to be removed.

4. The method of claim 3, wherein the sensor (5,15,25) controls the movement of the laser (3).

5. The method of claim 3 or 4, wherein the sensor (5,15,25) controls the intensity of the laser (3).

6. The method of one of claims 3 to 5, wherein the sensor (5, 15,25) is mounted on the laser (3).

7. The method of one of claims 3 to 5, wherein the sensor (5, 15,25) is moved parallel to the laser (3), but on the opposite side of the intermediate vehicle component (1).

8. The method of one of claims 3 to 7, wherein the sequence of layers of material (2,12) is chosen in such a way that the layer with the higher absorption value for the laser (3) forms the topmost layer of material (2).

9. The method of one of claims 1 to 8, wherein the sensor (5,15,25) is an infrared spectrometer and the local supervision of the local removal of the topmost of the at least one layers of material (2) comprises the evaluation of an IR spectrum measured by the infrared spectrometer.

10. The method of one of claims 1 to 8, wherein the sensor (5,15,25) is a camera and the local supervision of the local removal of the topmost of the at least one layers of material comprises the comparison of the colour of pixels of the camera picture with reference pixel values.

11. The method of one of claims 1 to 8, wherein the local supervision of the local removal of the topmost of the at least one layers of material (2) comprises measuring local thickness variations in the area in which the topmost of the at least one layers of material (2) with the sensor (5,15,25) and programming movement and/or intensity of the laser (3) based on the results of this measuring.

12. The method of one of claims 1 to 11, wherein the at least one side of the raw vehicle component (1) is covered completely with two layers of material (2) to create an intermediate vehicle component, so that by partial removal of the topmost of the layers of material (2) the intermediate vehicle component is provided with two different surface properties.
